# EUROPÄISCHE PATENTANMELDUNG

(11) **EP 3 629 470 A1**
(43) Veröffentlichungstag der Anmeldung: **01.04.2020**
(21) Anmeldenummer: 18197447.8
(22) Anmeldetag: 28.09.2018
(51) Int. Cl.: H02P 21/05, H02P 21/00, H02P 25/03, H02P 25/064, H02P 29/50, H02K 41/03

(54) **REDUZIEREN VON STÖRGERÄUSCHEN UND/ODER SCHWINGUNGEN BEIM BETRIEB EINER ELEKTRISCHEN MASCHINE**

(71) Anmelder: Siemens Aktiengesellschaft, 80333 München (DE)
(72) Erfinder: Knorr, Markus, 86157 Augsburg (DE); Schlatterer, Georg, 86573 Zahling (DE)

(57) **Zusammenfassung**

Die Erfindung betrifft ein Verfahren zum Reduzieren von Störgeräuschen und/oder Schwingungen beim Betrieb einer elektrischen Maschine (1), die ein Primärteil mit einer dreiphasigen Spulenwicklung und ein Sekundärteil mit Permanentmagneten aufweist. Bei dem Verfahren wird für eine d-Komponente eines dreiphasigen Spulenwicklungsstroms der Spulenwicklung ein Kompensationsstrom (Id) ermittelt, dessen Addition zu einem Sollwert der d-Komponente die Störgeräusche und/oder Schwingungen reduziert. Die Spulenwicklung wird mit einem Spulenwicklungsstrom bestromt, dessen d-Komponente auf die Summe des Sollwerts und des Kompensationsstroms (Id) eingestellt wird.

## Beschreibung

Die Erfindung betrifft ein Verfahren zum Reduzieren von Störgeräuschen und/oder Schwingungen beim Betrieb einer elektrischen Maschine, die ein Primärteil mit einer dreiphasigen Spulenwicklung und ein Sekundärteil mit Permanentmagneten aufweist.

Dabei kann die elektrische Maschine eine rotierende elektrische Maschine sein, deren Primärteil ein Stator ist und deren Sekundärteil ein Rotor ist, beispielsweise ein Synchronmotor oder ein Torquemotor. Die elektrische Maschine kann aber auch ein Linearmotor sein, deren Sekundärteil translatorisch gegenüber dem Primärteil bewegt wird. Ferner ist die Erfindung nicht auf eine als ein Motor ausgebildete elektrische Maschine beschränkt, sondern umfasst auch eine als ein Generator ausgebildete elektrische Maschine.

Im Fall eines Motors wird die Schubkraft beziehungsweise das Drehmoment durch elektromagnetische Kräfte zwischen den Motorteilen, das heißt zwischen dem Primärteil und dem Sekundärteil, erzeugt. Die erzeugten Kräfte sind über einen Luftspalt zwischen dem Primärteil und dem Sekundärteil verteilt und wirken je nach Motortyp lokal nicht gleichförmig auf die Motorteile. Die Schubkraftwirkung des Motors an dessen Anschraubflächen ist bei feldorientierter Regelung als Summe der lokal unterschiedlichen Kräfte hingegen üblicherweise weitgehend proportional zur kraft- bzw. momentbildenden so genannten q-Komponente des Spulenwicklungsstroms durch die Spulenwicklung des Primärteils. Lediglich bei hohen Strömen ändert sich diese Proportionalität durch Sättigungseffekte im Blechpaket des Primärteils. Bei genauer Betrachtung stellt man auch positionsabhängig leichte Abweichungen von der Proportionalität zwischen Schubkraft und der q-Komponente des Spulenwicklungsstroms fest, welche sich mit der Grundwelle und Vielfachen der Magnetteilung und Zahnteilung regelmäßig abbilden sowie zusätzlich stochastische Anteile aufweisen.

Diese Effekte werden als Rastkräfte beziehungsweise Rastmomente im unbestromten Zustand oder stromabhängige Kraft- beziehungsweise Momentenwelligkeit bezeichnet. Diese Welligkeiten liegen bei Motoren für so genannte Motion Control Anwendungen im Bereich von einem Prozent oder auch etwas mehr des Nennmoments beziehungsweise der Nennkraft. Durch gezieltes Einsteuern der q-Komponente des Spulenwicklungsstroms können diese Welligkeiten zum Teil kompensiert werden. Neben den Schubkraftkomponenten wirken über den Luftspalt dieser Motoren nicht nur die bekannten, gleichförmig anziehenden Kraftkomponenten zwischen den Motorteilen, sondern es treten ebenfalls und insbesondere positionsabhängige Welligkeiten auf.

Alle diese, insbesondere lokal unterschiedlich und periodisch nicht ideal stromproportional wirkenden Kraftkomponenten können potentiell zur Anregung von mechanischen Eigenschwingungen der Motorstrukturen führen, wenn die motordrehzahl- oder geschwindigkeitsabhängige Periode der Kräfte zu einer mechanischen Resonanzfrequenz der Eigenschwingformen des Motors oder der umgebenden Maschinenstruktur beziehungsweise des Gesamtsystems passt. Entsprechendes gilt für als Generatoren ausgebildete elektrische Maschinen. Derartige Schwingungen können insbesondere eine nicht tolerierbare Geräuschlast für ein Bedienpersonal einer elektrischen Maschine oder auch Störgeräusche für eine akustische Messmaschine, beispielsweise in Fahrzeugprüfständen, verursachen.

Um Schwingungen und eine Geräuschbelastung zu reduzieren, könnte beispielsweise eine andere Maschinengröße gewählt oder eine mechanische Struktur der elektrischen Maschine geändert werden, um die mechanischen Resonanzfrequenzen der Maschine zu verschieben. Dies erfordert jedoch eine Änderung der Maschine, ist kostspielig und kann dazu führen, dass ein für die Maschine vorgesehenes Drehmoment und/oder eine Enddrehzahl nicht erreicht werden können. Alternativ könnte versucht werden, einen Pulsweitenmodulationstakt einer Pulsweitenmodulation, mit der die Maschine gesteuert wird, zu verschieben, damit die Anregungsfrequenzen in einem geforderten Drehzahlbereich nicht mehr mit Resonanzfrequenzen der Maschine zusammenfallen. Allerdings kann der Pulsweitenmodulationstakt nicht beliebig verschoben werden. Außerdem reduziert eine Verringerung des Pulsweitenmodulationstakts die Regelungsdynamik der Maschine, und eine Erhöhung des Pulsweitenmodulationstakts erhöht die Verluste der Maschine. Ferner könnten Störgeräusche durch eine Schalldämmung oder Schalldämpfung reduziert werden, beispielsweise eine Schalldämmung durch ein geschlossenes Gehäuse oder eine Abdeckung für die Maschine oder eine Schalldämpfung durch einen Dämmstoff. Auch dies verursacht zusätzlichen Aufwand und Kosten und hat sich nicht als ausreichend erwiesen.

Der Erfindung liegt die Aufgabe zugrunde, ein verbessertes Verfahren zum Reduzieren von Störgeräuschen und/oder Schwingungen beim Betrieb einer elektrischen Maschine, die ein Primärteil mit einer dreiphasigen Spulenwicklung und ein Sekundärteil mit Permanentmagneten aufweist, anzugeben.

Die Aufgabe wird erfindungsgemäß durch die Merkmale des Anspruchs 1 gelöst.

Vorteilhafte Ausgestaltungen der Erfindung sind Gegenstand der Unteransprüche.

Bei dem erfindungsgemäßen Verfahren zum Reduzieren von Störgeräuschen und/oder Schwingungen beim Betrieb einer elektrischen Maschine, die ein Primärteil mit einer dreiphasigen Spulenwicklung und ein Sekundärteil mit Permanentmagneten aufweist, wird für eine d-Komponente eines dreiphasigen Spulenwicklungsstroms der Spulenwicklung ein Kompensationsstrom ermittelt, dessen Addition zu einem Sollwert der d-Komponente die Störgeräusche und/oder Schwingungen reduziert. Die Spulenwicklung wird mit einem Spulenwicklungsstrom bestromt, dessen d-Komponente auf die Summe des Sollwerts und des Kompensationsstroms eingestellt wird.

Die so genannte d-Komponente des Spulenwicklungsstroms beeinflusst die magnetische Flussdichte in dem Sekundärteil der elektrischen Maschine und ergibt sich zusammen mit der q-Komponente aus einer so genannten d/q-Transformation des dreiphasigen Spulenwicklungsstroms, die auch als Park-Transformation bezeichnet wird, in einem mit dem Sekundärteil bewegten Koordinatensystem.

Die Erfindung basiert auf der Idee, Kraftkomponenten quer zu dem Luftspalt zwischen dem Primärteil und dem Sekundärteil in anziehender Richtung zu nutzen, um Störgeräusche und Schwingungen beim Betrieb einer elektrischen Maschine zu reduzieren. Diese Kraftkomponenten können durch die d-Komponente des Spulenwicklungsstroms beeinflusst werden. Daher ermöglicht die Beeinflussung der d-Komponente durch einen geeigneten additiven Kompensationsstrom eine Reduzierung von Störgeräuschen und Schwingungen beim Betrieb der elektrischen Maschine. Da nur die Bestromung der elektrischen Maschine geändert wird, kann die Erfindung durch eine reine Softwarelösung realisiert werden, das heißt es ist keine Änderung der elektrischen Maschine und keine zusätzliche Hardware zur Reduzierung der Störgeräusche und/oder Schwingungen erforderlich, abgesehen gegebenenfalls von einer Messvorrichtung zur Erfassung der Störgeräusche und/oder Schwingungen, um die Ermittlung des Kompensationsstroms durch die Auswertung von Messungen der Störgeräusche und/oder Schwingungen zu optimieren und/oder zu automatisieren.

Eine Ausgestaltung der Erfindung sieht vor, dass die Amplituden und Phasenlagen verschiedener Frequenzanteile eines Frequenzspektrums des Kompensationsstroms unabhängig voneinander parametriert werden. Vorzugsweise umfassen die parametrierten Frequenzanteile dabei wenigstens einen Grundwellenanteil und/oder wenigstens einen Oberwellenanteil des Frequenzspektrums. Diese Ausgestaltung der Erfindung ermöglicht eine Bildung des Kompensationsstroms aus verschiedenen Frequenzanteilen, deren Amplituden und Phasenlagen unabhängig voneinander parametriert werden. Dadurch können Störgeräusche und/oder Schwingungen gezielt durch eine Parametrierung von Frequenzanteilen des Frequenzspektrums, insbesondere wenigstens eines Grundwellenanteils und/oder wenigstens eines Oberwellenanteils, unterdrückt werden.

Eine weitere Ausgestaltung der Erfindung sieht vor, dass eine Parametrierungsabhängigkeit der Störgeräusche und/oder Schwingungen von der Parametrierung des Kompensationsstroms gemessen wird und der Kompensationsstrom anhand von der gemessenen Parametrierungsabhängigkeit ermittelt wird. Beispielsweise wird die Parametrierungsabhängigkeit der Störgeräusche mit einem Mikrofon gemessen, und die Parametrierungsabhängigkeit der Schwingungen wird mit einem Mikrofon oder Beschleunigungssensor oder Kraftaufnehmer (beispielsweise zur Messung von Kräften an mechanischen Schnittstellen zwischen der elektrischen Maschine und einer Tragstruktur) oder Schwingungssensor gemessen. Diese Ausgestaltung der Erfindung ermöglicht eine quantitative Ermittlung der geeigneten Parametrierung des Kompensationsstroms anhand von Messungen, mit denen die Abhängigkeit der Störgeräusche und/oder Schwingungen von der Parametrierung ermittelt wird.

Insbesondere kann die gemessene Parametrierungsabhängigkeit mit einem mathematischen Optimierungsverfahren ausgewertet werden, um die Reduzierung der Störgeräusche und/oder Schwingungen zu optimieren. Beispielsweise werden mit dem mathematischen Optimierungsverfahren Amplituden von Frequenzanteilen eines Frequenzspektrums der Störgeräusche und/oder Schwingungen ausgewertet. Diese Ausgestaltung der Erfindung ermöglicht eine automatisierte Auswertung der gemessenen Parametrierungsabhängigkeit mit einem mathematischen Optimierungsverfahren. Die Auswertung des Amplitudenspektrums ermöglicht insbesondere das Erkennen und Unterdrücken von Amplituden bestimmter Frequenzanteile der Störgeräusche und/oder Schwingungen, die sich besonders störend auswirken.

Bei einer weiteren Ausgestaltung der Erfindung kann die Parametrierung des Kompensationsstroms online, das heißt im Betrieb der elektrischen Maschine, verändert werden. Dadurch kann die Parametrierung des Kompensationsstroms im Betrieb der Maschine optimiert und/oder einem geänderten Betriebspunkt der Maschine angepasst werden.

Eine weitere Ausgestaltung der Erfindung sieht vor, dass für verschiedene Betriebspunkte der elektrischen Maschine jeweils eine Parametrierung des Kompensationsstroms ermittelt und in einem Kennfeld hinterlegt wird und die Parametrierung des Kompensationsstroms in Abhängigkeit von einem momentanen Betriebspunkt dem Kennfeld entnommen wird. Ein Betriebspunkt der elektrischen Maschine wird insbesondere wenigstens durch eine Drehzahl und/oder ein Drehmoment beziehungsweise eine Schubkraft der elektrischen Maschine charakterisiert. Diese Ausgestaltung der Erfindung ermöglicht eine betriebspunktabhängige Einstellung des Kompensationsstroms anhand eines Kennfeldes, in dem die für einen Betriebspunkt jeweils geeignete Parametrierung des Kompensationsstroms hinterlegt ist. Dies berücksichtigt, dass Störgeräusche und/oder Schwingungen von dem Betriebspunkt der elektrischen Maschine, insbesondere von der Drehzahl und dem Drehmoment beziehungsweise der Schubkraft der elektrischen Maschine, abhängen. Ferner ermöglicht diese Ausgestaltung der Erfindung, die Werte des für eine Maschine ermittelten Kennfelds für in Serie produzierte elektrische Maschinen bereits als Motorparameter vorzuhalten, um den Parametrierungsprozess einzusparen beziehungsweise durch vorbelegte Parameterwerte zu verkürzen.

Eine weitere Ausgestaltung der Erfindung sieht für eine elektrische Maschine mit mehreren Segmenten, die Spulenwicklungsströme mit voneinander verschiedenen Phasenlagen erzeugen, vor, dass für den Spulenwicklungsstrom der d-Komponente jedes Segments ein Kompensationsstrom ermittelt wird. Diese Ausgestaltung der Erfindung berücksichtigt, dass unterschiedliche Phasenlagen verschiedener Segmente einer elektrischen Maschine unterschiedliche Kompensationsströme zur Reduzierung von Störgeräuschen und/oder Schwingungen erfordern.

Die oben beschriebenen Eigenschaften, Merkmale und Vorteile dieser Erfindung sowie die Art und Weise, wie diese erreicht werden, werden klarer und deutlicher verständlich im Zusammenhang mit der folgenden Beschreibung von Ausführungsbeispielen, die im Zusammenhang mit den Zeichnungen näher erläutert werden. Dabei zeigen:
FIG 1 ein Blockdiagramm einer elektrischen Maschine, einer Steuervorrichtung und einer Messvorrichtung,
FIG 2 ein Ablaufdiagramm eines Verfahrens zum Reduzieren von Störgeräuschen und/oder Schwingungen beim Betrieb einer elektrischen Maschine,
FIG 3 einen Kompensationsstrom in Abhängigkeit von einer Zeit,
FIG 4 ein Amplitudenspektrum von Störgeräuschen beim Betrieb einer elektrischen Maschine ohne einen Kompensationsstrom,
FIG 5 ein Amplitudenspektrum von Störgeräuschen beim Betrieb einer elektrischen Maschine mit einem Kompensationsstrom.

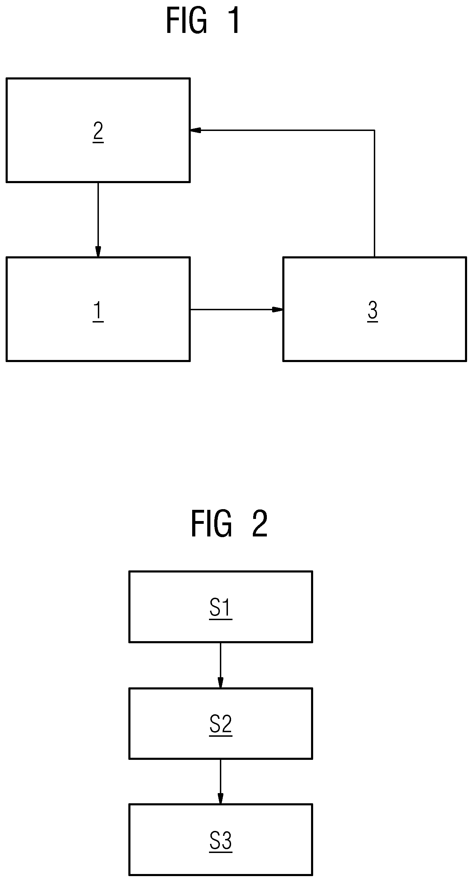

Figur 1 zeigt ein Blockdiagramm einer elektrischen Maschine 1, einer Steuervorrichtung 2 zum Steuern der elektrischen Maschine 1 und einer Messvorrichtung 3 zum Erfassen von Störgeräuschen beim Betrieb der elektrischen Maschine 1.

Die elektrische Maschine 1 weist ein Primärteil mit einer dreiphasigen Spulenwicklung und ein Sekundärteil mit Permanentmagneten auf. Beispielsweise ist die elektrische Maschine 1 ein Synchronmotor, ein Torquemotor oder ein Linearmotor oder eine aus mehreren derartigen Motoren oder mehreren Motorsegmenten zusammengesetzte elektrische Maschine 1.

Die Steuervorrichtung 2 steuert oder regelt insbesondere einen dreiphasigen Spulenwicklungsstrom der Spulenwicklung. Beispielsweise ist die Steuervorrichtung 2 ein Frequenzumrichter. Die Steuervorrichtung 2 ist insbesondere zur Durchführung des unten anhand von Figur 2 beschriebenen Verfahrens ausgebildet.

Die Messvorrichtung 3 weist wenigstens ein Mikrofon zum Erfassen der Störgeräusche auf.

Figur 2 zeigt ein Ablaufdiagramm eines erfindungsgemäßen Verfahrens mit Verfahrensschritten S1 bis S3 zum Reduzieren der Störgeräusche beim Betrieb der elektrischen Maschine 1. Bei dem Verfahren wird für eine d-Komponente des Spulenwicklungsstroms ein Kompensationsstrom Id ermittelt, dessen Addition zu einem Sollwert der d-Komponente die Störgeräusche und/oder Schwingungen reduziert, wobei der Sollwert insbesondere auch Null sein kann. Dabei sind die Amplituden und Phasenlagen verschiedener Frequenzanteile eines Frequenzspektrums des Kompensationsstroms Id unabhängig voneinander parametrierbar, das heißt die Amplituden und Phasenlagen dieser Frequenzanteile sind unabhängig voneinander vorgebbar und mittels der Steuervorrichtung 2 einstellbar.

In einem ersten Verfahrensschritt S1 werden an einem Betriebspunkt der elektrischen Maschine 1 für verschiedene Parametrierungen des Kompensationsstroms Id mittels der Messvorrichtung 3 jeweils die Störgeräusche erfasst. Der Betriebspunkt wird beispielsweise durch eine Drehzahl und/oder ein Drehmoment beziehungsweise eine Schubkraft der elektrischen Maschine 1 charakterisiert.

In einem zweiten Verfahrensschritt S2 werden die in dem ersten Verfahrensschritt S1 erfassten Messwerte für jede dabei eingestellte Parametrierung des Kompensationsstroms Id ausgewertet und es wird für den im ersten Verfahrensschritt S1 untersuchten Betriebspunkt der elektrischen Maschine 1 eine Parametrierung des Kompensationsstroms Id ermittelt, die die Störgeräusche reduziert. Dabei wird die Parametrierung des Kompensationsstroms Id beispielsweise online, das heißt im Betrieb der elektrischen Maschine 1, verändert. Die parametrierten Frequenzanteile des Kompensationsstroms Id umfassen insbesondere wenigstens einen Grundwellenanteil und wenigstens einen Oberwellenanteil, können zusätzlich aber auch Frequenzanteile von nicht ganzzahligen Vielfachen wenigstens einer Grundwellenfrequenz umfassen. Die untersuchten Parametrierungen werden durch geeignet gewählte Stützpunkte im Parameterraum definiert, so dass zwischen den Stützpunkten liegende Parametrierungen durch eine Interpolation hinreichend genau ermittelt werden können.

Beispielsweise wird in dem zweiten Verfahrensschritt S2 für jede eingestellte Parametrierung ein Amplitudenspektrum für Amplituden A von Frequenzanteilen eines Frequenzspektrums der bei der eingestellten Parametrierung erfassten Störgeräusche ermittelt. Die ermittelten Amplitudenspektren werden beispielsweise mit einem mathematischen Optimierungsverfahren ausgewertet, um eine Parametrierung für eine optimale Reduzierung der Störgeräusche zu ermitteln.

In einem dritten Verfahrensschritt S3 wird für den momentanen Betriebspunkt der elektrischen Maschine 1 die Spulenwicklung mit einem Spulenwicklungsstrom bestromt, dessen d-Komponente auf die Summe des Sollwerts der d-Komponente und des Kompensationsstroms Id, dessen Parametrierung in dem zweiten Verfahrensschritt S2 ermittelt wurde, eingestellt wird.

Das Verfahren kann dahingehend erweitert werden, dass die ersten beiden Verfahrensschritte S1, S2 für verschiedene Betriebspunkte der elektrischen Maschine 1 ausgeführt werden und die dabei in dem zweiten Verfahrensschritt S2 für die verschiedenen Betriebspunkte jeweils ermittelten Parametrierungen in einem Kennfeld hinterlegt werden. Die Parametrierung des Kompensationsstroms Id wird in der Folge in Abhängigkeit von einem momentanen Betriebspunkt dem Kennfeld entnommen. Für in Serie produzierte elektrische Maschinen 1 könnten die Werte dieses Kennfelds ferner bereits als Motorparameter vorgehalten werden, um den Parametrierungsprozess einzusparen beziehungsweise durch vorbelegte Parameterwerte zu verkürzen.

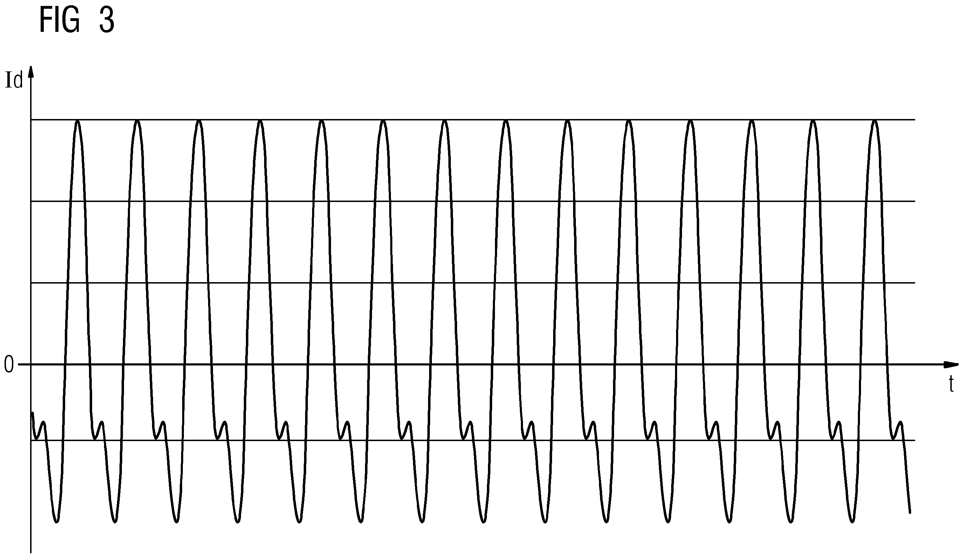

Figur 3 zeigt beispielhaft einen in dem zweiten Verfahrensschritt S2 ermittelten Kompensationsstrom Id in Abhängigkeit von einer Zeit t. Der Kompensationsstrom Id nimmt periodisch positive und negative Werte an, das heißt die d-Komponente des Spulenwicklungsstroms wird durch den Kompensationsstrom Id gegenüber ihrem Sollwert periodisch vergrößert und verkleinert. Die Amplituden des Kompensationsstroms Id betragen nur etwa ein bis zwei Prozent des maximalen Motorstroms.

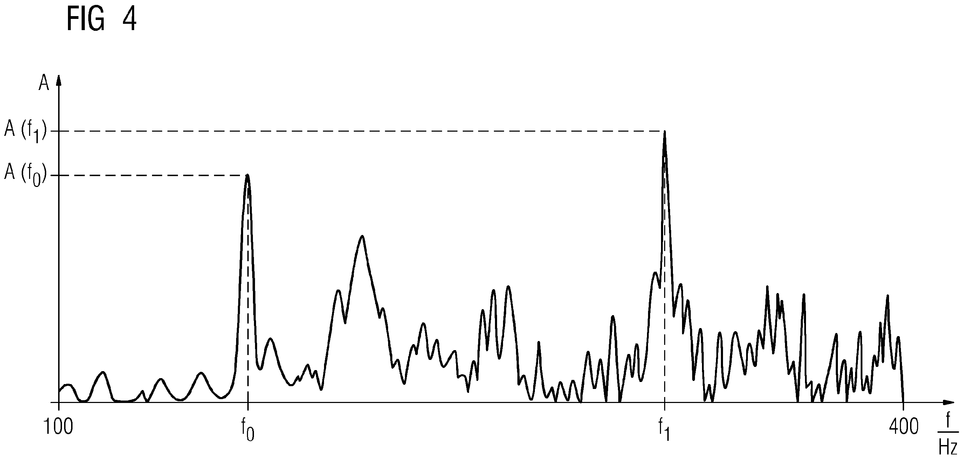

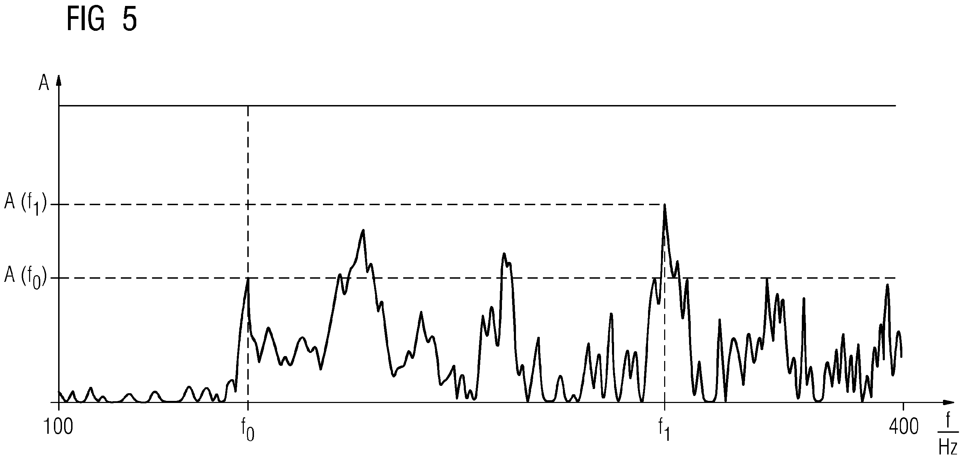

Die Figuren 4 und 5 illustrieren die Reduzierung der Störgeräusche durch das erfindungsgemäße Verfahren. Figur 4 zeigt ein Amplitudenspektrum von Amplituden A der Störgeräusche in Abhängigkeit von einer Geräuschfrequenz f für einen Betriebspunkt einer elektrischen Maschine 1 ohne Änderung der d-Komponente des Spulenwicklungsstroms durch den Kompensationsstrom Id. Figur 5 zeigt das Amplitudenspektrum der Störgeräusche für denselben Betriebspunkt der elektrischen Maschine 1 mit einer erfindungsgemäßen Änderung der d-Komponente des Spulenwicklungsstroms durch den Kompensationsstrom Id. Die Figuren 4 und 5 zeigen insbesondere, dass die Amplituden A(fo) und A(f₁) einer Grundwellenfrequenz fo und einer Oberwellenfrequenz f₁, die doppelt so groß wie die Grundwellenfrequenz f₀ ist, durch den Kompensationsstrom Id deutlich reduziert werden (jeweils um etwa 15 dB).

Das oben beschriebene Verfahren wird analog für die Reduzierung von Schwingungen beim Betrieb der elektrischen Maschine 1 verwendet. In diesem Fall kann die Messvorrichtung 3 statt eines Mikrofons beispielsweise wenigstens einen Beschleunigungssensor, Kraftaufnehmer oder Schwingungssensor zur Erfassung der Schwingungen aufweisen.

Obwohl die Erfindung im Detail durch bevorzugte Ausführungsbeispiele näher illustriert und beschrieben wurde, so ist die Erfindung nicht durch die offenbarten Beispiele eingeschränkt und andere Variationen können vom Fachmann hieraus abgeleitet werden, ohne den Schutzumfang der Erfindung zu verlassen.

## Patentansprüche

1. Verfahren zum Reduzieren von Störgeräuschen und/oder Schwingungen beim Betrieb einer elektrischen Maschine (1), die ein Primärteil mit einer dreiphasigen Spulenwicklung und ein Sekundärteil mit Permanentmagneten aufweist, wobei
- für eine d-Komponente eines dreiphasigen Spulenwicklungsstroms der Spulenwicklung ein Kompensationsstrom (Id) ermittelt wird, dessen Addition zu einem Sollwert der d-Komponente die Störgeräusche und/oder Schwingungen reduziert,
- und die Spulenwicklung mit einem Spulenwicklungsstrom bestromt wird, dessen d-Komponente auf die Summe des Sollwerts und des Kompensationsstroms (Id) eingestellt wird.

2. Verfahren nach Anspruch 1, wobei die Amplituden und Phasenlagen verschiedener Frequenzanteile eines Frequenzspektrums des Kompensationsstroms (Id) unabhängig voneinander parametriert werden.

3. Verfahren nach Anspruch 2, wobei die parametrierten Frequenzanteile wenigstens einen Grundwellenanteil des Frequenzspektrums umfassen.

4. Verfahren nach einem der vorhergehenden Ansprüche, wobei die parametrierten Frequenzanteile wenigstens einen Oberwellenanteil des Frequenzspektrums umfassen.

5. Verfahren nach einem der Ansprüche 2 bis 4, wobei eine Parametrierungsabhängigkeit der Störgeräusche und/oder Schwingungen von der Parametrierung des Kompensationsstroms (Id) gemessen wird und der Kompensationsstrom (Id) anhand von der gemessenen Parametrierungsabhängigkeit ermittelt wird.

6. Verfahren nach Anspruch 5, wobei die Parametrierungsabhängigkeit der Störgeräusche mit einem Mikrofon gemessen wird.

7. Verfahren nach Anspruch 5 oder 6, wobei die Parametrierungsabhängigkeit der Schwingungen mit einem Mikrofon oder Beschleunigungssensor oder Kraftaufnehmer oder Schwingungssensor gemessen wird.

8. Verfahren nach einem der Ansprüche 5 bis 7, wobei die gemessene Parametrierungsabhängigkeit mit einem mathematischen Optimierungsverfahren ausgewertet wird, um die Reduzierung der Störgeräusche und/oder Schwingungen zu optimieren.

9. Verfahren nach Anspruch 8, wobei mit dem mathematischen Optimierungsverfahren Amplituden (A) von Frequenzanteilen eines Frequenzspektrums der Störgeräusche und/oder Schwingungen ausgewertet werden.

10. Verfahren nach einem der Ansprüche 2 bis 9, wobei die Parametrierung des Kompensationsstroms (Id) im Betrieb der elektrischen Maschine (1) veränderbar ist.

11. Verfahren nach einem der Ansprüche 2 bis 10, wobei für verschiedene Betriebspunkte der elektrischen Maschine (1) jeweils eine Parametrierung des Kompensationsstroms (Id) ermittelt und in einem Kennfeld hinterlegt wird und die Parametrierung des Kompensationsstroms (Id) in Abhängigkeit von einem momentanen Betriebspunkt dem Kennfeld entnommen wird.

12. Verfahren nach Anspruch 11, wobei ein Betriebspunkt der elektrischen Maschine (1) wenigstens durch eine Drehzahl und/oder ein Drehmoment beziehungsweise eine Schubkraft der elektrischen Maschine (1) charakterisiert wird.

13. Verfahren nach einem der vorhergehenden Ansprüche, wobei, wenn die elektrische Maschine (1) mehrere Segmente aufweist, die Spulenwicklungsströme mit voneinander verschiedenen Phasenlagen erzeugen, für den Spulenwicklungsstrom der d-Komponente jedes Segments ein Kompensationsstrom (Id) ermittelt wird.
